# EUROPEAN PATENT APPLICATION

(11) **EP 2 560 272 A1**
(43) Date of publication of application: **20.02.2013**
(21) Application number: 11768486.0
(22) Date of filing: 13.04.2011
(51) Int. Cl.: H02K 53/00

(54) **MOTOR**

(30) Priority: 16.04.2010 ES 201000491
(71) Applicant: Freixas Vila, Ramon, 43424 Sarral, Tarragona (ES)
(72) Inventor: Freixas Vila, Ramon, 43424 Sarral, Tarragona (ES)
(86) International application number: PCT/ES2011/000116
(87) International publication number: WO 2011/128474

(57) **Abstract**

Motor.

The rotor is formed by two parallel shafts (1, 2) with groups of magnets (3) and a material (4) that orients the magnetic field in each group of magnets (3). The stator, formed by groups of magnets (5), is close to the rotor with the stator axis (6) orthogonal to each rotor shaft (1, 2).

The groups of magnets (3) of each rotor shaft are situated in attraction mode close behind one another on a helical line at a different distance from each rotor shaft, the first group of magnets (3) which interacts with the stator being the group farthest from each rotor shaft and the final group which interacts with the stator being the group closest to each rotor shat.

The invention is used for aiding torque, such as in a pedal of a bicycle as the main force is from human muscle.

## Description

### TECHNICAL FIELD

The invention concerns the field of magnetic motors,

### STATE OF THE ART

The patents W02007113357 and WO2008068362 show the interaction of a rotor formed by magnets with a stator likewise formed by magnets, and the rotation force is generated by means of the magnetic attraction between the rotor and the stator. In these prior patents there is a first attraction which initiates the movement; however this first attractions is only produced when the rotor is very close to the stator because when the rotor is not close, there is a magnetic repulsion which makes it impossible to achieve the closeness required in order to create the first attraction and thus, movement. Also, in the prior patents the arrangement of the groups of rotor magnets, which are separated by the same distance, causes the magnetic field to circulate among the groups of rotor magnets and the magnetic field in the rotor closes, thus creating the problem that the rotor loses power for interacting with the stator. Three well-known laws of physics are applied in the present invention:
First law: the attraction force between two magnets is greater than when the two magnets are repelled.
Second law: The magnetic force between two magnets depends on the distance which separates said magnets.
Third law: The magnetic force of one magnet depends on the size thereof.

### DESCRIPTION

The motor is formed by a rotor and a stator which are both made up of magnets. Given that there are various attractions between magnets, the configuration of the rotor and the stator magnets should first be explained so as to be able to then explain the operating principle.

The components which form the rotor are groups of magnets and a material which orients the magnetic field. The magnets have faces with a single magnetic pole and faces with two magnetic poles. The material which orients the magnetic field is at the end of each group of magnets.

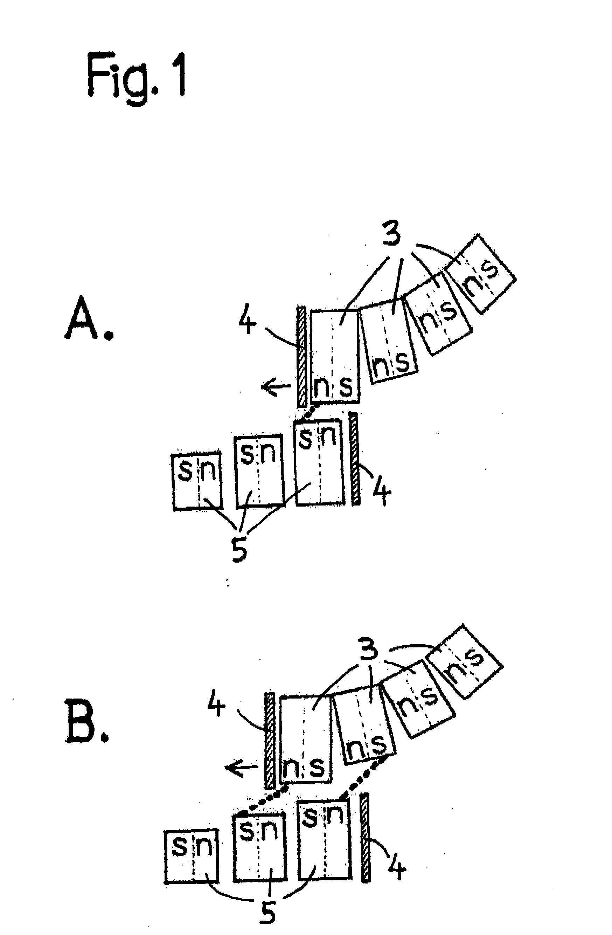

A group of rotor magnets is formed by magnets arranged one behind another in attraction mode on a circular or staggered line which is separate from the rotation plane, and as such, each magnet from the group is situated at a different distance for interacting with the stator. The magnets have faces with a single magnetic pole and faces with two magnetic poles. The face of each magnet which interacts with the stator has both magnetic poles (figure 1). Each group of magnets has an end which is the first area of the group of magnets that magnetically interacts with the stator so as to cause rotation. The end of the group has a single magnetic pole which is next to the material that orients the magnetic field (figure 1).

The stator is formed by magnets that are close together and a material that orlents the magnetic field on one end. The stator is formed by magnets of various sizes arranged in attraction mode one behind the other becoming progressively smaller in size. The magnets have faces with a single magnetic pole and faces with two magnetic poles, and the face of each magnet which interacts with the rotor has both magnetic poles. Therefore, each stator magnet is situated at a different distance for interacting with the rotor,

The material which orients the magnetic field can be a material with high magnetic permeability which provides a path through which the magnetic field passes. Therefore, the material acts as a magnetic pole.

The magnetic interaction between the rotor and the stator is created when the magnets are close, such as in step A of figure 1, according to the first law there is a very strong attraction between the north magnetic pole of the first rotor magnet and the south magnetic pole of the first stator magnet. A small broken line shows this attraction. Then step B takes place, which involves two attractions, namely an attraction between the north magnetic pole of the first rotor magnet and the south pole of the second stator magnet. Also in said step B, there is an attraction between the north pole of the first stator magnet and the south pole of the second rotor magnet, but these attractions are weaker according to the second and third laws because the magnets are separated by a greater distance and the magnets are increasingly smaller. Following this, there is another succession of increasingly weaker attractions which allow for the rotation of the rotor in a single direction.

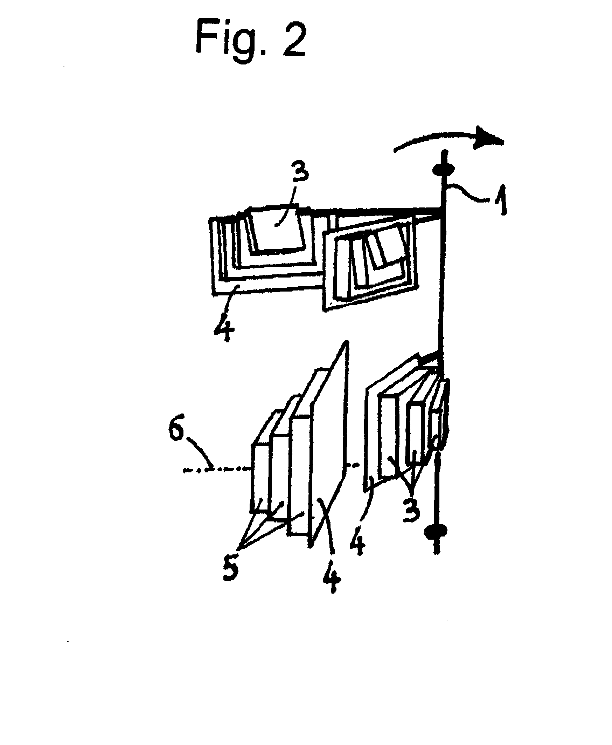

The present invention creates a novel configuration of various groups of magnets on the rotor shaft. The rotor groups formed by magnets are very close together in order to form the novel configuration. The groups of magnets of each shaft are on the radii in different rotation planes on a helical line having a different distance from the rotation shaft (figure 2). The following is the explanation of the design of this structure: the first group of magnets which interacts with the stator is the farthest from each rotor shaft and the last group which interacts with the stator is the closest to the rotation shaft thereof (figure 2).

In order to solve the problem of the first attraction which is mentioned in the prior art, a motor is created having the rotor formed by two parallel rotation shafts separated by a distance. Each rotor shaft has groups of magnets situated on the radii of the shaft. The solution to the problem is the reason for making the end of the group of each shaft with a magnetic polarity that is the opposite to that of the end of the group of the other shaft. Thus, each shaft has radii ends having the opposite magnetic polarity and there is an attraction which makes the shafts turn until the groups of the radii are situated in the closest position. This turning is what initiates the rotor movement.

The stator in the present invention is situated in the middle of the straight line separating the two shafts. Since the rotor is formed with two shafts, a stator made of magnets with two close areas has to be formed. Each stator area only magnetically interacts with the rotor groups of the closest shaft.

The turning of the motor is first caused by the attraction of the ends of the groups of the two rotation shafts, after which the rotor groups are attracted to the stator according to the explanation mentioned above in figure 1. Each stator area first attracts the groups which are farthest from each rotation shaft and then the others until the last group.

The present invention has three advantages. The first is the creation of a first magnetic attraction which initiates movement. Another advantage is that since the groups are close, the magnetic field is strengthen and is not lost due to space as occurred in the prior art patents. The third advantage is that the helical arrangement of the groups of magnets on each shaft makes it so that the rotor can better escape from the attraction field of the stator.

### DESCRIPTION OF THE DRAWINGS

Figure 1: Shows the magnetic interaction between the rotor magnets (3) and the stator magnets (5). In steps A and B, a small broken line shows the attraction of the magnetic poles.
Figure 2: Shows the novel helical configuration of the groups of rotor magnets (3) at a different distance from a rotation shaft (1).

The stator formed by magnets (5) is close to the helical configuration of the rotor.

Figure 3: Shows the two shafts (1,2) of the rotor separated by a distance. Each shaft has the above helical configuration but has another plane with more groups of magnets (3). The stator formed by two areas of magnets (5) is in the middle of the distance which separates the two shafts (1,2).

### EMBODIMENT

The motor is formed by magnets in the rotor and stator. The magnets have faces with a single magnetic pole and faces with two magnetic poles.

The rotor is composed of two parallel shafts (1,2) separated by a distance. The components forming the rotor are groups of magnets (3) and a material (4) which orients the magnetic field, which is situated on an end of each group. The groups are disposed on the radii of each shaft (1,2).

The stator is formed by two close areas having bipolar magnets (5) and a material (4) which orients the magnetic field, which is situated on an end of each stator area. The stator is situated on the straight line separating the two rotation shafts (1,2) at an equal distance from each shaft. The stator forms an axis (6) which is orthogonal to each rotation shaft. In order to form each stator area, bipolar magnets (5) of various sizes but of similar width, are arranged one behind another in attraction mode. The magnets (5) are attracted to each other on the flat faces of the largest surface thereof which has a single magnetic pole and are separated by a small distance, progressively decreasing the face of the largest surface. The magnets (5) have two flat faces with a single magnetic pole, and the faces of each stator magnet (5) having both magnetic poles are parallel to the stator axis (6) (figure 1). The material (4) which orients the magnetic field is situated at the end of the stator which has the greatest surface. The material (4) is situated at the end parallel to the face of the magnet (5) of the end having a single magnetic pole.

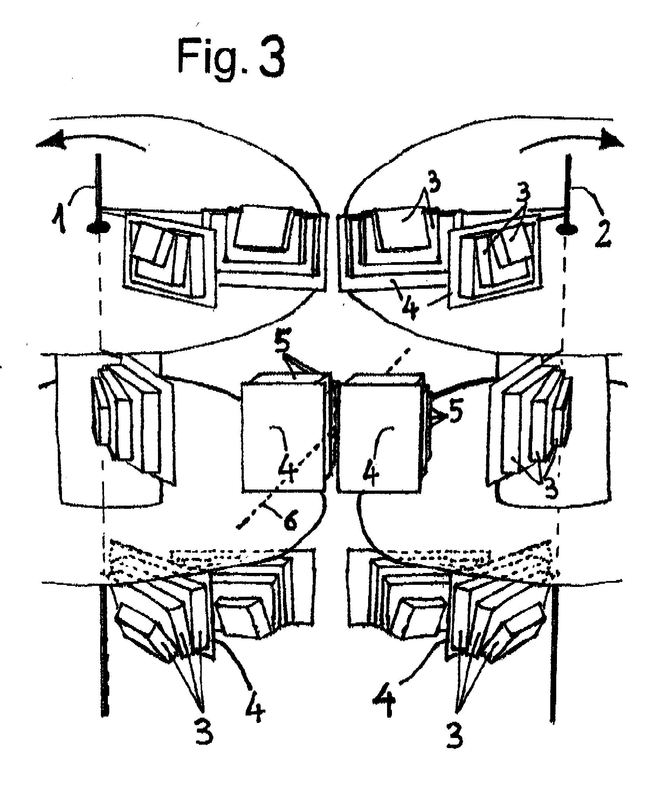

The stator of the motor is formed by two areas with magnets (5) close together (figure 3), given that each stator area only magnetically interacts with the rotor groups of the closest shaft. Each rotor group is formed by rectangular bipolar magnets (3) of various sizes but of similar width, which have faces with a single magnetic pole and faces with two magnetic poles. The magnets (3) have two flat faces with a single magnetic pole. The magnets (3) are arranged one behind the other and are attracted to each other by the flat face of the largest surface thereof, which has a single magnetic pole. The magnets(3) are separated by a small distance forming a circular or staggered structure having two ends at a different distance from the stator. The faces which are not attracted to each other have both magnetic poles for interacting with the stator. The magnets (3) of various sizes are arranged so that the faces having the largest surface are disposed in progressively decreasing order. The magnet (3) which has the face with the largest surface of the group is situated at the end of the group closest to the stator.

The material (4) which orients the magnetic field of each rotor group is situated at the end closest to the stator parallel to the face of the magnet (3) at the end of the group and is situated next to a single magnetic pole. The material (4) which orients the field of the rotor and the stator can be a material with high magnetic permeability or a material with high electric conductivity which, when producing induced currents, said currents stop the passage of the magnetic field, or a combination of both materials.

The location of the magnetic poles in the magnets (3) of the two rotor shafts (1,2) corresponds to the following explanation: the end of the group of a shaft (1) with the material (4) has a magnetic polarity which is opposite to the end with the material (4) of the group of the other shaft (2), so that there is attraction between the ends of the radii of the rotor shafts (1,2).

The location of the stator magnets (5) in respect of the rotor, is related to the turning movement, since the first rotor and stator magnets which interact are those which have the end with the largest size. The location of the magnetic poles corresponds to the following explanation: the end with the material (4) which orients the field of each stator area has the same magnetic polarity as the end with the material (4) of the rotor group of the closest shaft. In order to increase motor power, various groups of magnets (3) in attraction mode are situated on the radii of each rotor shaft (1, 2). The best configuration of various groups on each rotor shaft (1,2) is when: two groups are situated very close together one behind the other on the same plane; the first group of magnets (3) which interacts with the stator is the farthest from the rotor shaft (1) (figure 2); the second group is behind the first and a little closer to the rotor shaft (1); and a third group should be situated on another plane of rotation, such as on a plane close to the stator axis (6), and this group is the closest to the rotor shaft (1).

The best configuration for creating a motor is that which is shown in figure 3 , in which another plane of rotation is situated on each rotor shaft (1,2) on the same shaft after the third group , having the same configuration as the two very close groups situated on the same plane one behind the other and the first group situated farthest from each rotor shaft, so that each area of the stator is situated between said three planes of rotation (figure 3).

### INDUSTRIAL APPLICATION

The application of the invention is a device for aiding the rotation torque, such as in a bicycle pedal as the main force is from human muscle.

## Claims

1. A motor comprising a rotor and a stator, which are both formed by bipolar magnets, and a material (4) which orients the magnetic field. The rotor and the stator magnets have faces with a single magnetic pole and faces with two magnetic poles. The magnets have two flat faces with a single magnetic pole. The stator comprises magnets (5) of various sizes but of similar width, which are situated one behind another in attraction mode, the attraction is on the flat face of the largest surface having a single magnetic pole, and said magnets (5) are separated by a small distance with the face of the largest surface becoming progressively smaller; the faces of each stator magnet (5), having both magnetic poles, are parallel to the stator axis (6); the material (4) which orients the magnetic field is situated at the stator end with the largest surface, and the material (4) is parallel to the end magnet (5) face. The rotor comprises groups formed by magnets (3) and a material (4) which orients the magnetic field at one of the ends of each group, the groups are situated on the radii of the rotor; each group of rotor magnets (3) is formed by magnets (3) of various sizes but of similar width, which are arranged one behind another and are attracted to each other by the flat face of the largest surface having a single magnetic pole, the face of the largest surface of the magnets (3) becomes progressively smaller, so as to form a circular structure with two ends at a different distance from the stator, the faces which are not attracted to each other have both magnetic poles for interacting with the stator; the material (4) which orients the magnetic field of each group of rotor magnets (3) is situated at the end closest to the stator parallel to the end magnet (3) face; is **characterised in that** the rotor is formed by two parallel rotation shafts (1,2) separated by a distance; the stator is situated in the middle of said distance with the stator being formed by two close areas of magnets (5), each area only magnetically interacts with the groups of the closest shaft (1,2); and on each rotor shaft (1,2) the groups of magnets (3) are close in attraction mode on the radii of each shaft (1,2), on at least a helical line having a different distance to the rotation shaft thereof, on each shaft (1,2) the first group of magnets (3) which interacts with each stator area is the farthest from the rotation shaft and the last group which interacts with each stator area is the closest to the rotation shaft.

2. The motor, according to claim 1, is **characterised in that** the groups of magnets (3) of a rotor shaft (1) have ends comprising the material (4) which orients the magnetic field, with a magnetic polarity that is the opposite to that of the ends with the material (4) of the groups of the other rotor shaft (2).

3. The motor, according to claim 1, is **characterised in that** each stator area has end material (4) with the same magnetic polarity as the ends with the material (4) of the rotor groups of the closest shaft.
